## Europäisches Patentamt
## European Patent Office
## Office européen des brevets

(19)

(11) Numéro de publication: **0 357 478**
A1

(12)
# DEMANDE DE BREVET EUROPEEN

(21) Numéro de dépôt: **89402111.2**

(22) Date de dépôt: **25.07.89**

(51) Int. Cl.⁵: **B 01 F 3/04**
C 02 F 3/20

(30) Priorité: **08.08.88 FR 8810699**

(43) Date de publication de la demande:
**07.03.90 Bulletin 90/10**

(84) Etats contractants désignés:
**BE CH DE ES GB IT LI NL**

(71) Demandeur: **"DEGREMONT" Société dite:**
**183, Avenue du 18 Juin 1940**
**F-92508 Rueil-Malmaison Cédex (FR)**

(72) Inventeur: **Fond, Olivier**
**62 bis, Avenue du Général Leclerc**
**F-78230 Le Pecq (FR)**

(74) Mandataire: **Armengaud, Charles**
**Cabinet ARMENGAUD AINE 3, Avenue Bugeaud**
**F-75116 Paris (FR)**

(54) **Dispositif pour l'introduction d'un gaz dans un liquide.**

(57) Dispositif destiné à réaliser l'introduction d'un gaz, ou d'un mélange gazeux, dans un liquide, utilisable notamment pour la diffusion d'oxygène, ou d'un mélange gazeux en contenant, dans une enceinte où s'effectue le traitement d'eau par voie aérobie, ce dispositif, constitué par un tube perforé entouré d'un manchon souple, déformable, également perforé, étant caractérisé en ce que les perforations dont il est muni présentent un orifice d'entrée (3) dont la section de passage (D) est importante et telle qu'elle réduise au minimum la perte de charge provoquée par le passage du gaz ou du mélange gazeux, à travers l'orifice, cet orifice étant relié à un orifice de sortie (4) dont la section de passage (d) est réduite, de façon à réaliser la diffusion du gaz, ou du mélange gazeux, sous forme de fines bulles.

**Description**

## DISPOSITIF POUR L'INTRODUCTION D'UN GAZ DANS UN LIQUIDE

La présente invention concerne un dispositif perfectionné pour l'introduction d'un gaz dans un liquide, un tel dispositif étant notamment utilisé pour la diffusion d'air ou d'oxygène dans les bassins où s'effectue le traitement de l'eau au moyen de boues activées.

Un tel dispositif se présente sous la forme d'un tube perforé véhiculant le gaz ou l'air à diffuser, revêtu d'un manchon en matière élastomère présentant également des perforations.

Pour être pleinement efficace, un tel dispositif doit satisfaire deux importantes conditions :
- il doit assurer un rendement optimal de transfert du gaz,
- tout en réduisant au maximum la perte de charge qui influe sur la consommation d'énergie nécessaire à sa mise en oeuvre.

Les dispositifs connus, ou bien assurent un bon rendement du transfert de gaz, grâce à une diffusion sous forme de fines bulles, mais au prix d'une forte perte de charge due au passage de l'air à travers les perforations du manchon, ou bien ne provoquent qu'une faible perte de charge, mais présentent alors un faible rendement du transfert de gaz.

Par contre, le dispositif suivant l'invention satisfait ces deux conditions car il assure, grâce à la conception des perforation du manchon recouvrant le tube, à la fois une très faible perte de charge et un excellent rendement du transfert de gaz grâce à une diffusion du gaz sous forme de très fines bulles déterminant une excellente répartition du gaz au débouché du dispositif.

Le dispositif suivant l'invention est essentiellement caractérisé en ce que les perforations dont est muni le manchon entourant le tube véhiculant le gaz à diffuser, présentent un orifice d'entrée dont la section de passage est importante et telle qu'elle réduise au minimum la perte de charge provoquée par le passage du gaz ou du mélange gazeux, à travers l'orifice, cet orifice étant relié à un orifice de sortie dont la section de passage est réduite, de façon à réaliser la diffusion du gaz, ou du mélange gazeux, sous forme de fines bulles.

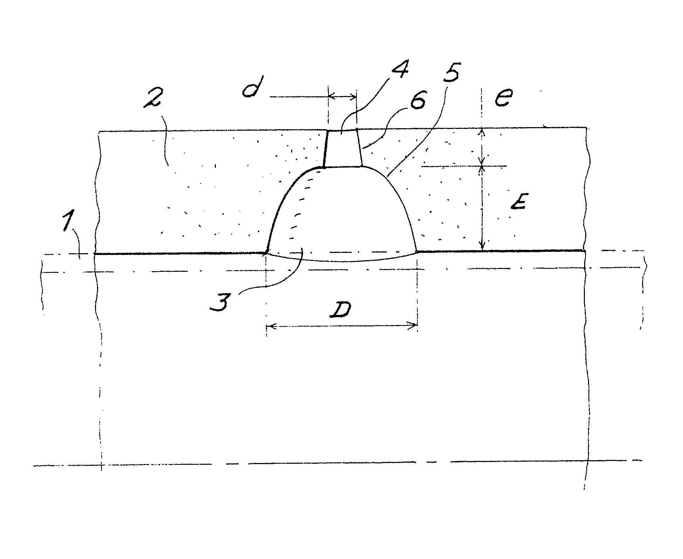

Les divers caractéristiques et avantages de l'invention ressortiront de la description, qui va suivre, d'une de ses formes possibles de réalisation, cette description étant faite en référence à la Figure unique du dessin annexé qui montre, en coupe un tel dispositif.

Il est bien précisé qu'il s'agit uniquement d'un exemple et que toutes autres formes, proportions et dispositions pourraient être adoptées sans sortir du cadre de l'invention.

Le tube 1, véhiculant le gaz à diffuser, par exemple dans un appareil de traitement d'eau au moyen de boues activées, non représenté, comporte une pluralité d'orifices coopérant avec des perforations pratiquées dans le manchon 2 en elastomère, entourant le tube 1 dont la Figure montre la forme particulière, suivant l'invention.

Les orifices d'entrée et de sortie de la perforation sont forts différents : l'orifice d'entrée 3 a une section de passage D importante, l'orifice de sortie 4 une section de passage (d) de faible dimension, le rapport D/d pouvant varier de 1,2 à 10.

Dans l'exemple traité, en outre, la perforation présente, sur une quantité E de son épaisseur totale une zone en forme de bol 5 reliée à l'orifice de sortie 4 par une zone en forme de canal 6, à bords convergents, vers la sortie, s'étendant sur une quantité e de l'épaisseur totale du manchon. Le rapport E/e peut aller de 0,2 à 5.

Les dispositions adoptées suivant l'invention provoquent la diffusion du gaz sous forme de fines bulles tout en réduisant au minimum la perte de charge due au passage de l'air à travers l'orifice.

D'autre part, elles sont particulièrement favorables au décolmatage de la membrane en cas de bouchage. Une pression interne élevée entraîne une augmentation importante de la section de la perforation, favorable à l'expulsion de toute particule ou amas de matière qui obstruerait l'orifice de sortie du gaz, ce qui a pour résultat de ne pas entraîner une augmentation progressive de la perte de charge par colmatage au cours du temps.

L'exemple suivant illustre les avantages qu'apporte l'invention :

Pour diffuser, dans un appareil de traitement d'eau, 10 Nm3/h d'air sur 1 m2 de plancher, on peut employer deux diffuseurs classiques, tels que disques poreux ou trois manchons en élastomère de 1 m, disposant de 600 trous sur la face supérieure.

On a utilisé des manchons en élastomère suivant l'invention d'une épaisseur de 1,5 mm, avec des perforations de diamètre intérieur de l'ordre de 0,4 mm et de diamètre extérieur 0,2 mm.

Sous une immersion de 4 mm des diffuseurs, la perte de charge des disques poreux atteignait 0,4 bar tandis que celle des manchons se situait à 0,01 bar. Le rendement du transfert d'oxygène était de 18 % pour les disques poreux et atteignait 25 % pour les manchons.

Les différences observées montrent l'efficacité des manchons conçus selon l'invention.

**Revendications**

1 - Dispositif destiné à réaliser l'introduction d'un gaz, ou d'un mélange gazeux, dans un liquide, utilisable notamment pour la diffusion d'oxygène, ou d'un mélange gazeux en contenant, dans une enceinte où s'effectue le traitement d'eau par voie aérobie, ce dispositif, constitué par un tube perforé entouré d'un manchon souple, déformable, également perforé, étant caractérisé en ce que les perforations dont il est muni présentent un orifice d'entrée (3) dont la section de passage (D) est importante et telle qu'elle réduise au minimum la perte de charge provoquée par le passage du gaz ou du mélange gazeux, à travers l'orifice, cet orifice étant relié à un orifice de sortie (4) dont la section de passage (d) est réduite, de façon à réaliser la diffusion du gaz, ou du mélange gazeux, sous forme de fines bulles.

2 - Dispositif suivant la revendication 1, caractérisé en ce que le rapport entre les sections de passage de l'orifice d'entrée (D) et de l'orifice de sortie (d) des perforations peut varier de 1,2 à 10.

3 - Dispositif suivant l'une quelconque des revendications précédentes, caractérisé en ce que l'orifice d'entrée se prolonge par une zone en forme de bol (5), reliée à l'orifice de sortie par un canal (6) étroit conduisant à l'orifice de sortie (4).

4 - Dispositif suivant la revendication 3, caractérisé en ce que la zone en forme de bol (5) règne sur une quantité (E) de l'épaisseur du manchon, le canal sur une quantité (e), le rapport E/e étant avantageusement de 0,2 à 5.

5 - Dispositif suivant la revendication 3, caractérisé en ce que le canal (6) converge vers l'orifice (4) de sortie de la perforation.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | AT-B- 265 992 (M. DANJES) <br> * revendication 1 * <br> --- | 1,5 | B 01 F 3/04 <br> C 02 F 3/20 |
| X | DE-A-2 502 475 (OY NOKIA AB) <br> * figures 7,8 * <br> --- | 1,3,5 | |
| A | US-A-4 138 335 (D. S. MURPHY) <br> * figures 2,3 * <br> ----- | 1 | |

DOMAINES TECHNIQUES RECHERCHES (Int. Cl.5)

C 02 F 3/00
B 01 F 3/00

Le présent rapport a été établi pour toutes les revendications

| Lieu de la recherche | Date d'achèvement de la recherche | Examinateur |
|---|---|---|
| BERLIN | 18-10-1989 | KESTEN W.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)